# EUROPÄISCHE PATENTSCHRIFT

(11) **EP 3 619 445 B1**
(45) Veröffentlichungstag und Bekanntmachung des Hinweises auf die Patenterteilung: **24.11.2021**
(21) Anmeldenummer: 18718094.8
(22) Anmeldetag: 21.03.2018
(51) Int. Cl.: F16H 25/20, F16H 25/22, H02K 11/21, H02K 7/06

(54) **VERFAHREN ZUM BETREIBEN EINER AKTORANORDNUNG FÜR EIN KUPPLUNGSBETÄTIGUNGSSYSTEM UND AKTORANORDNUNG**
METHOD FOR OPERATING AN ACTUATOR ARRANGEMENT FOR A CLUTCH OPERATING SYSTEM, AND ACTUATOR ARRANGEMENT
PROCÉDÉ POUR FAIRE FONCTIONNER UN ARRANGEMENT ACTIONNEUR POUR UN SYSTÈME D'ACTIONNEMENT D'EMBRAYAGE ET ARRANGEMENT ACTIONNEUR

(30) Priorität: 03.05.2017 DE 102017109420
(43) Veröffentlichungstag der Anmeldung: 11.03.2020
(73) Patentinhaber: Schaeffler Technologies AG & Co. KG, 91074 Herzogenaurach (DE)
(72) Erfinder: DIETRICH, Markus, 77704 Oberkirch (DE); FRANZ, Viktor, 76137 Karlsruhe (DE)
(86) Internationale Anmeldenummer: PCT/DE2018/100243
(87) Internationale Veröffentlichungsnummer: WO 2018/202231

(56) Entgegenhaltungen:
- WO-A1-2009/124684
- DE-A1-102004 001 268
- DE-A1-102010 040 426
- DE-A1-102011 003 851
- FR-A1- 2 842 267

## Beschreibung

Die Erfindung betrifft ein Verfahren zum Betreiben einer Aktoranordnung für ein Kupplungsbetätigungssystem, welche ein elektromotorisch betätigtes Getriebe mit einer Gewindespindel umfasst, welche eine Drehbewegung in eine Linearbewegung eines Kolbens in axiale Richtung umsetzt, wobei ein von dem Kolben zurückgelegter axialer Weg mit einer Sensoreinrichtung ermittelt wird sowie eine Aktoranordnung zur Durchführung des Verfahrens.

DE 10 2011 003 851 A1 offenbart ein Verfahren zum Betreiben einer Aktoranordnung für ein Kupplungsbetätigungssystem, welche ein elektromotorisch betätigtes Getriebe mit einer Gewindespindel umfasst, welche eine Drehbewegung in eine Linearbewegung eines Kolbens in axiale Richtung umsetzt, wobei ein von dem Kolben zurückgelegter axialer Weg mit einer Sensoreinrichtung ermittelt wird. Dabei ist die Gewindespindel um einen Zapfen verlängert, der mit einem Ferritkern versehen ist.

DE 10 2010 040 426 A1 offenbart ein Verfahren zum Betreiben einer Aktoranordnung für ein Kupplungsbetätigungssystem, welche ein elektromotorisch betätigtes Getriebe mit einer Gewindespindel umfasst, welche eine Drehbewegung in eine Linearbewegung eines Kolbens in axiale Richtung umsetzt, wobei ein von dem Kolben zurückgelegter axialer Weg mit einer Sensoreinrichtung ermittelt wird. Dabei ist die Gewindespindel um einen Schaft verlängert. Der Schaft kann magnetisch ausreichend permeabel ausgeführt sein.

DE 10 2004 001 268 A1 offenbart ein Verfahren zum Betreiben einer Aktoranordnung für ein Kupplungsbetätigungssystem, welche ein elektromotorisch betätigtes Getriebe mit einer Gewindespindel umfasst, welche eine Drehbewegung in eine Linearbewegung eines Kolbens in axiale Richtung umsetzt, wobei ein von dem Kolben zurückgelegter axialer Weg mit einer Sensoreinrichtung ermittelt wird. Dabei taucht ein Ferritkern, der mit dem Kolben gekoppelt ist, in eine ortsfeste Spule ein.

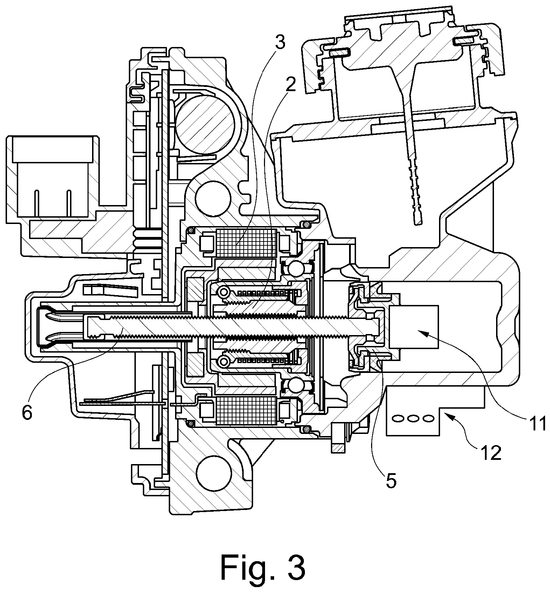

Aus der DE 10 2012 218 255 A1 ist ein Verfahren zum Ansteuern einer Kupplung bekannt, wobei die Kupplung mit einem Hydrostataktor angesteuert wird. Der Hydrostataktor umfasst eine Getriebespindel 6, die verdreht wird, um einen Kolben 5 eines Geberzylinders in axialer Richtung zu bewegen, wobei durch einen Wegsensor der absolute Weg des Kolbens 5 bzw. der Getriebespindel 6 in axialer Richtung ermittelt wird. Zur Ermittlung des absoluten Weges ist an dem Kolben 5, wie aus Fig. 3 ersichtlich, ein Magnet 11 angebracht, der mit einem außen an dem Aktor befestigten externen Wegsensor 12 zusammenwirkt. Diese Kombination aus Magneten 11 und externem Wegsensor 12 beansprucht sehr viel Bauraum und erhöht die Kosten der Herstellung der Aktoranordnung.

Der Erfindung liegt die Aufgabe zugrunde, ein Verfahren zum Betreiben einer Aktoranordnung für ein Kupplungsbetätigungssystem anzugeben, bei welchem der Bauraum verkleinert und trotzdem eine zuverlässige Bestimmung des von dem Kolben zurückgelegten Weges möglich ist.

Erfindungsgemäß ist die Aufgabe dadurch gelöst, dass die induktive Sensoreinrichtung mit der mit dem Kolben verbundenen metallischen Gewindespindel in einer Wirkverbindung steht, wobei die metallische Gewindespindel als Sensortarget zur Bestimmung des axialen Weges verwendet wird. Dies hat den Vorteil, dass mit der Gewindespindel ein als solches in der Aktoranordnung vorhandenes Bauelement als Sensortarget verwendet wird, weshalb erfidungsgemäß auf ein separates Sensortarget verzichtet wird, was den Bauraum der Aktoranordnung verkleinert. Zur Erfüllung der induktiven Messfunktion ist es ausreichend, dass die Gewindespindel aus einem metallischen Material gefertigt ist, so dass im Zusammenhang mit einer induktiven Sensoreinrichtung die axiale Position der Gewindespindel und somit die des Kolbens zuverlässig ermittelt werden kann.

Vorteilhafterweise wird in den Verfahrweg der Gewindespindel eine Spule eingebracht, die mit einer Auswerteschaltung die Sensoreinrichtung bildet. Über die Ausdehnung der Spule wird dabei die Empfindlichkeit der Induktivitätsmessung bestimmt, da der Eintauchweg der Gewindespindel in die Spule proportional zu einer Spulenbedämpfung ist.

In einer Ausgestaltung wird eine Erregerfrequenz der Spule gegenüber ihrem umgebenden Einflussbereich innerhalb der Aktoranordnung abgestimmt. Mittels dieser Anpassung der Erregerfrequenz kann beispielsweise ein statisches Metallrohr im Spuleninneren elektronisch ausgeblendet werden. Somit werden immer zuverlässige Messergebnisse über den axialen Weg des Kolbens in der Aktoranordnung bereitgestellt.

In einer Ausführungsform wird die Spule linearisiert. Damit wird ein proportionaler Zusammenhang zwischen gemessener Induktivität und dem von der Gewindespindel zurückgelegten Weg hergestellt, was die Wegbestimmung vereinfacht.

Um Nichtlinearitäten auszugleichen, die am Ende der Spule durch statische metallische Komponenten im unmittelbaren Einflussbereich der Spule auftreten, wird die Spule am Bandende linearisiert.

In einer Variante wird der aus der Induktivitätsmessung gewonnene Weg anhand einer Messung der Umdrehung der Gewindespindel mittels eines Rotorlagesensors plausibilisiert. Dadurch wird eine Sicherheitsfunktion in der Aktoranordnung implementiert. Durch die Nutzung von zwei verschiedenen physikalischen Messprinzipien und getrennten Targets kann die Induktivitätsauswertung anhand der Messergebnisse des Rotorlagesensors permanent auf Richtigkeit überprüft werden.

Die Erfindung betrifft auch eine Aktoranordnung für ein Kupplungsbetätigungssystem, umfassend ein Getriebe mit einer Gewindespindel, wobei die Gewindespindel eine Drehbewegung des Getriebes in eine lineare Bewegung eines mit der Gewindespindel verbundenen Kolbens umsetzt, und eine Sensoreinrichtung zur Ermittlung eines Weges des Kolbens. Bei einer Aktoranordnung, bei welcher der Bauraum verringert ist, umschließt eine Spule die als Sensortarget benutzte metallische Gewindespindel, wobei die Spule mit einer Auswerteschaltung zur Bestimmung der Spindelposition aus einer Induktivitätsänderung der Spule verbunden ist. Dabei wird die Gewindespindel direkt als Sensortarget benutzt, da sie aus Metall besteht und die Spule somit bedämpft. Erfindungsgemäß wird auf ein separates Sensortarget verzichtet. Die Verwendung der Gewindespindel als Sensortarget hat außerdem den Vorteil, dass eine Verkippung der Gewindespindel nicht zu einem Messfehler führt, was durch die Induktivitätsmessung mit der Spule auch ein direktes Bestimmen für das von dem Kolben verdrängte Fluid im Kupplungsbetätigungssystem ermöglicht.

In einer Ausführungsform ist eine mit der Spule verbundene Auswerteschaltung zur Bestimmung des Weges des Kolbens in Abhängigkeit von der Induktivitätsänderung der Spule innerhalb der Aktoranordnung angeordnet. Da diese Auswerteschaltungen sehr klein sind, können sie direkt auf einer Trägerplatte, die auch andere Elektronikbauteile des Aktors trägt, angeordnet werden. Eine Anordnung einer externen Sensoreinrichtung kann somit entfallen, was ebenfalls zur Reduzierung des Bauraumes der Aktoranordnung beiträgt.

Vorteilhafterweise ist um die Spule ein metallischer Schirm angeordnet. Dadurch wird die Aktoranordnung gegenüber äußeren dynamischen Einflüssen robuster gestaltet, da der metallische Schirm statisch ist und gegenüber den Einflüssen dominant, wodurch diese Einflüsse aus dem Messergebnis herauskalibriert werden können.

In einer Ausgestaltung gibt die auf einem Spulenträger angeordnete Spule in ihrer Ausdehnung einen Eintauchbereich für die metallische Gewindespindel vor. Die Ausdehnung der Spule erlaubt somit eine Abstimmung zu einem maximalen, von dem Kolben zurücklegbaren axialen Weg, wobei der Eintauchweg der Spindel in die Spule proportional der Spulenbedämpfung ist.

Zur Überprüfung der Genauigkeit des durch die Induktivitätsmessung bestimmten axialen Weges des Kolbens ist an einer Stirnseite der Gewindespindel gegenüberliegend ein Rotorlagesensor zur Detektion der Umdrehung der Gewindespindel angeordnet. Anhand dieser Umdrehung kann ebenfalls auf den zurückgelegten Weg der Gewindespindel geschlossen werden, welcher mit dem durch die Induktivitätsmessung bestimmten Weg abgeglichen wird.

Die Erfindung lässt zahlreiche Ausführungsformen zu. Eine davon soll anhand der in der Zeichnung dargestellten Figuren näher erläutert werden.

Es zeigen:
- Fig. 1:: ein Ausführungsbeispiel der erfindungsgemäßen Aktoranordnung,
- Fig. 2:: ein Ersatzschaltbild für die Induktivitätsmessung,
- Fig. 3:: eine Aktoranordnung nach dem Stand der Technik.

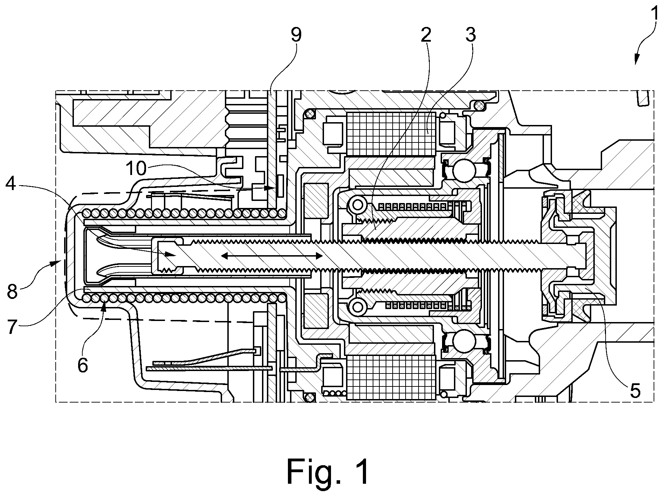

In Fig. 1 ist ein Ausführungsbeispiel der erfindungsgemäßen Aktoranordnung 1 dargestellt, welche ein Getriebe 2 aufweist, das von einem Elektromotor 3 angetrieben wird. Die Rotationsbewegung des Getriebes 2 wird über eine Gewindespindel 4 in eine lineare Bewegung umgesetzt, wodurch einen Kolben 5 axial bewegt wird. Die Gewindespindel 4 besteht aus einem Metall. An einer dem Kolben 5 entgegengesetzten Seite ist die Gewindespindel 4 von einer Spule 6 umgeben, die auf einem Trägerelement 7 angeordnet ist. Die Spule 6 und das Trägerelement 7 sind von einem Metallschirm 8 umgeben. Auf einer Trägerplatte 9 ist eine Auswerteschaltung 10 platziert, die mit der Spule 6 verbunden ist.

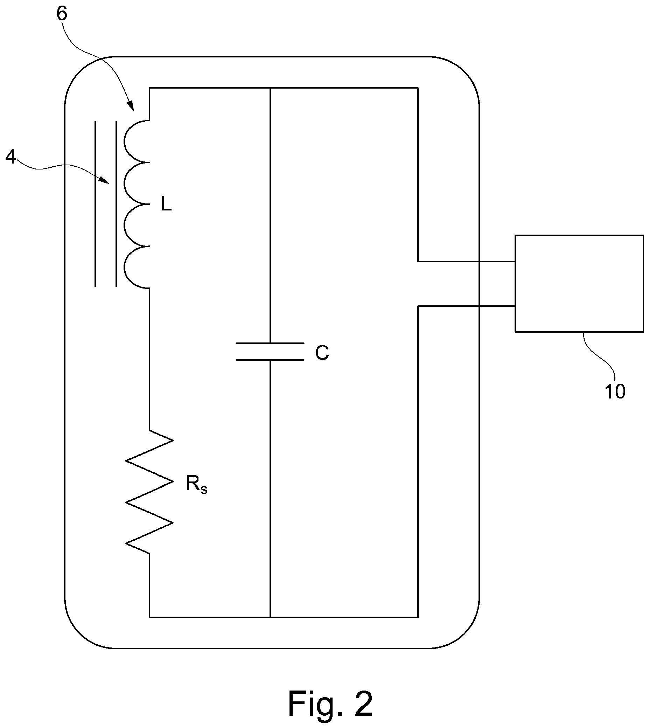

Bei der Bewegung der metallischen Gewindespindel 3, die als metallischer Kern der Spule 6 wirkt, ändert sich die Induktivität der Spule 6. Um die Position des Kolbens 5 nun mithilfe der Gewindespindel 3 festzustellen, bedämpft die Gewindespindel 3 die Spule 6 beim Eintauchen in den von der Spule 6 vorgegebenen Eintauchweg. Der Eintauchweg der Gewindespindel 4 ist somit proportional der Spulenbedämpfung. Diese Spulenbedämpfung wird mit der Auswerteschaltung 10 gemessen, da diese unterschiedliche Induktivitäten der Spule zur Folge hat. Die Auswerteschaltung 10 schließt dabei durch die Induktivitätsmessung auf die Position der Gewindespindel 4 und somit auf den von dem Kolben 5 zurückgelegten Weg. Ein Ersatzschaltbild ist in Fig. 2 dargestellt.

Insbesondere um nichtlineare Induktivitäten auszugleichen, die in erster Linie durch statische metallische Komponenten im unmittelbaren Einflussbereich der Spule 6 auftreten, ist die Spule 6 linearisiert. Der Metallschirm 8 bewirkt die Abschirmung der Spule 6 gegen äußere dynamische Einflüsse. Durch die Anpassung einer Erregerfrequenz der Spule 6 an die unmittelbare Umgebung wird somit auch das statische Metallrohr des Metallschirmes 8 durch einen Offsetabgleich im Ausgangssignal der Auswerteschaltung 10 ausgeblendet.

In einer Ausgestaltung ist an einer, entgegengesetzt zum Kolben liegenden Stirnseite der Gewindespindel 4 ein nicht weiter dargestellter magnetischer Rotorlagesensor angeordnet. Dieser Rotorlagesensor dient zur Feststellung der axialen Position der Gewindespindel 4 beim Einschalten der Aktoranordnung. Dies ist notwendig, um einen kompletten Verfahrweg der Gewindespindel 4 abzudecken, der mehrere Motorumdrehungen betragen kann. Über 360° kann die Position der Gewindespindel durch den Rotorlagesensor für die Motorkommutierung ermittelt werden. Somit kann der axiale Weg, der durch die Induktivitätsmessung bestimmt wurde, anhand der Umdrehungsmessung des Rotorlagesensors abgeglichen werden.

### Bezugszeichenliste

- 1: Aktoranordnung
- 2: Getriebe
- 3: Elektromotor
- 4: Gewindespindel
- 5: Kolben
- 6: Spule
- 7: Trägerelement
- 8: Metallschirm
- 9: Trägerplatte
- 10: Auswerteelektronik
- 11: Magnet
- 12: Wegsensor

## Patentansprüche

1. Verfahren zum Betreiben einer Aktoranordnung für ein Kupplungsbetätigungssystem, welche ein elektromotorisch betätigtes Getriebe (2) mit einer metallischen Gewindespindel (4) umfasst welche eine Drehbewegung in eine Linearbewegung eines Kolbens (5) in axiale Richtung umsetzt, wobei ein von dem Kolben (5) zurückgelegter axialer Weg mit einer induktiven Sensoreinrichtung (6, 10) ermittelt wird, wobei die induktive Sensoreinrichtung (6, 10) mit der mit dem Kolben (5) verbundenen metallischen Gewindespindel (4) in einer Wirkverbindung steht, **dadurch gekennzeichnet, dass** die metallische Gewindespindel (4) als Sensortarget zur Bestimmung des axialen Weges verwendet wird und auf ein separates Sensortarget verzichtet wird.

2. Verfahren nach Anspruch 1, **dadurch gekennzeichnet, dass** in den Verfahrweg der Gewindespindel (4) eine Spule (6) eingebracht wird, die mit einer Auswerteschaltung (10) die Sensoreinrichtung bildet.

3. Verfahren nach Anspruch 1 oder 2, **dadurch gekennzeichnet, dass** eine Erregerfrequenz der Spule (6) gegenüber ihrem umgebenden Einflussbereich innerhalb der Aktoranordnung (1) abgestimmt wird.

4. Verfahren nach Anspruch 2 oder 3, **dadurch gekennzeichnet, dass** die Spule (6) linearisiert wird.

5. Verfahren nach mindestens einem der vorhergehenden Ansprüche, **dadurch gekennzeichnet, dass** der aus der Induktivitätsmessung gewonnene Weg anhand einer Messung der Umdrehung der Gewindespindel (4) mittels eines Rotorlagesensors plausibilisiert wird.

6. Aktoranordnung für ein Kupplungsbetätigungssystem, umfassend ein Getriebe (2) mit einer Gewindespindel (4), wobei die Gewindespindel (4) eine Drehbewegung des Getriebes (2) in eine lineare Bewegung eines mit der Gewindespindel (4) verbundenen Kolbens (5) umsetzt, und eine Sensoreinrichtung (6, 10) zur Ermittlung des Weges des Kolbens (5), **dadurch gekennzeichnet, dass** eine Spule (6) die als Sensortarget genutzte, metallische Gewindespindel (4) umschließt und auf ein separates Sensortarget verzichtet wird und die Spule (6) mit einer Auswerteschaltung (10) zur Bestimmung der Spindelposition aus einer Induktivitätsänderung der Spule (6) verbunden ist.

7. Aktoranordnung nach Anspruch 6, **dadurch gekennzeichnet, dass** die mit der Spule (6) verbundene Auswerteschaltung (10) zur Bestimmung des Weges des Kolbens (5) in Abhängigkeit von der Induktivitätsänderung der Spule (6) innerhalb der Aktoranordnung (1) angeordnet ist.

8. Aktoranordnung nach Anspruch 6 oder 7, **dadurch gekennzeichnet, dass** um die Spule (6) ein metallischer Schirm (8) angeordnet ist.

9. Aktoranordnung nach Anspruch 6, 7 oder 8, **dadurch gekennzeichnet, dass** die auf einem Spulenträger (9) angeordnete Spule (6) in ihrer Ausdehnung einen Eintauchbereich für die metallischen Gewindespindel (4) vorgibt.

10. Aktoranordnung nach mindestens einem der vorhergehenden Ansprüche 6 bis 9, **dadurch gekennzeichnet, dass** einer Stirnseite der Gewindespindel (6) gegenüberliegend ein Rotorlagesensor zur Detektion der Umdrehung der Gewindespindel (6) angeordnet ist.

## Claims

1. A method for operating an actuator arrangement for a clutch operating system, which comprises an electric motoroperated transmission (2) having a metallic threaded spindle (4) which converts a rotary movement into a linear movement of a piston (5) in the axial direction, wherein an axial path covered by the piston (5) is determined with an inductive sensor device (6, 10), wherein the inductive sensor device (6, 10) is in an operative connection with the metallic threaded spindle (4) connected to the piston (5), **characterised in that** the metallic threaded spindle (4) is used as a sensor target to determine the axial path and a separate sensor target is dispensed with.

2. The method according to claim 1, **characterised in that** a coil (6) is introduced into the travel path of the threaded spindle (4), which coil forms the sensor device together with an evaluation circuit (10).

3. The method according to claim 1 or 2, **characterised in that** an excitation frequency of the coil (6) is matched to its surrounding area of influence within the actuator arrangement (1).

4. The method according to claim 2 or 3, **characterised in that** the coil (6) is linearised.

5. The method according to at least one of the preceding claims, **characterised in that** the path obtained from the inductance measurement is checked for plausibility on the basis of a measurement of the rotation of the threaded spindle (4) by means of a rotor position sensor.

6. An actuator arrangement for a clutch operating system, comprising a transmission (2) with a threaded spindle (4), wherein the threaded spindle (4) converts a rotary movement of the transmission (2) into a linear movement of a piston (5) connected to the threaded spindle (4), and a sensor device (6, 10) for determining the path of the piston (5), **characterised in that** a coil (6) surrounds the metallic threaded spindle (4) used as the sensor target and a separate sensor target is dispensed with and the coil (6) is connected to an evaluation circuit (10) for determining the spindle position from a change in inductance of the coil (6).

7. The actuator arrangement according to claim 6, **characterised in that** the evaluation circuit (10) connected to the coil (6) for determining the path of the piston (5) as a function of the change in inductance of the coil (6) is arranged within the actuator arrangement (1).

8. The actuator arrangement according to claim 6 or 7, **characterised in that** a metallic screen (8) is arranged around the coil (6).

9. The actuator arrangement according to claim 6, 7 or 8, **characterised in that** the extent of the coil (6) arranged on a coil carrier (9) defines an immersion area for the metallic threaded spindle (4).

10. The actuator arrangement according to at least one of the preceding claims 6 to 9, **characterised in that** a rotor position sensor for detecting the rotation of the threaded spindle (6) is arranged opposite one end face of the threaded spindle (6).

## Revendications

1. Procédé pour faire fonctionner un agencement actionneur pour un système d'actionnement d'embrayage, qui comprend un engrenage à actionnement électromotorisé (2) pourvu d'une broche filetée métallique (4) qui convertit un mouvement de rotation en un mouvement linéaire d'un piston (5) dans la direction axiale, une course axiale parcourue par le piston (5) étant déterminée avec un dispositif capteur inductif (6, 10), le dispositif capteur inductif (6, 10) étant en liaison fonctionnelle avec la broche filetée métallique (4) reliée au piston (5), **caractérisé en ce que** la broche filetée métallique (4) est utilisée comme cible de capteur pour déterminer la course axiale et une cible de capteur séparée est abandonnée.

2. Procédé selon la revendication 1, **caractérisé en ce qu'**une bobine (6) est introduite dans la course de déplacement de la broche filetée (4) et forme le dispositif capteur avec un circuit d'évaluation (10).

3. Procédé selon la revendication 1 ou 2, **caractérisé en ce qu'**une fréquence d'excitation de la bobine (6) est adaptée à sa zone d'influence environnante à l'intérieur de l'agencement actionneur (1).

4. Procédé selon la revendication 2 ou 3, **caractérisé en ce que** la bobine (6) est linéarisée.

5. Procédé selon au moins l'une quelconque des revendications précédentes, **caractérisé en ce que** la vraisemblance de la course obtenue à partir de la mesure d'inductance est vérifiée par mesure de la rotation de la broche filetée (4) au moyen d'un capteur de position de rotor.

6. Agencement actionneur pour un système d'actionnement d'embrayage, comprenant un engrenage (2) avec une broche filetée (4), la broche filetée (4) convertissant un mouvement de rotation de l'engrenage (2) en un mouvement linéaire d'un piston (5) relié à la broche filetée (4) et un dispositif capteur (6, 10) pour déterminer la course du piston (5), **caractérisé en ce qu'**une bobine (6) entoure la broche filetée métallique (4) utilisée comme cible de capteur et une cible de capteur séparée est abandonnée et la bobine (6) est connectée à un circuit d'évaluation (10) pour déterminer la position de la broche à partir d'une variation d'inductance de la bobine (6).

7. Agencement actionneur selon la revendication 6, **caractérisé en ce que** le circuit d'évaluation (10) connecté à la bobine (6) est disposé à l'intérieur l'agencement actionneur (1) pour déterminer la course du piston (5) en fonction de la variation d'inductance de la bobine (6).

8. Agencement actionneur selon la revendication 6 ou 7, **caractérisé en ce qu'**un écran métallique (8) est disposé autour de la bobine (6).

9. Agencement actionneur selon la revendication 6, 7 ou 8, **caractérisé en ce que** l'étendue de la bobine (6) disposée sur un porte-bobine (9) définit une zone d'immersion pour la broche filetée métallique (4).

10. Agencement actionneur selon au moins l'une quelconque des revendications précédentes 6 à 9, **caractérisé en ce qu'**un capteur de position de rotor pour détecter la rotation de la broche filetée (6) est disposé en face d'une face frontale de la broche filetée (6).
